# EUROPÄISCHE PATENTSCHRIFT

(11) **EP 1 252 458 B1**
(45) Veröffentlichungstag und Bekanntmachung des Hinweises auf die Patenterteilung: **13.07.2005**
(21) Anmeldenummer: 01982654.4
(22) Anmeldetag: 13.11.2001
(51) Int. Cl.: F16K 17/04

(54) **ÜBERDRUCKVENTIL MIT EINEM FEDERDRUCKBELASTETEN MEMBRANSCHLIESSKÖRPER**
PRESSURE RELIEF VALVE WITH A SPRING-LOADED MEMBRANE CLOSING BODY
SOUPAPE DE SURETE PRESENTANT UN CORPS DE FERMETURE A DIAPHRAGME A RESSORT

(30) Priorität: 24.11.2000 DE 10058515
(43) Veröffentlichungstag der Anmeldung: 30.10.2002
(73) Patentinhaber: Obrist Engineering GmbH, 6890 Lustenau (AT); Luk Fahrzeug-Hydraulik GmbH & Co. KG, 61352 Bad Homburg (DE)
(72) Erfinder: KUHN, Peter, D-69469 Weinheim (DE); OBRIST, Frank, A-6850 Dornbirn (AT); KROESS, Stefan, A-6850 Dornbirn (AT); WEBER, Georg, D-63329 Egelsbach (DE)
(74) Vertreter: Quehl, Horst Max, Dipl.-Ing.
(86) Internationale Anmeldenummer: PCT/IB2001/002158
(87) Internationale Veröffentlichungsnummer: WO 2002/042668

(56) Entgegenhaltungen:
- DE-B- 1 095 074
- FR-A- 2 677 425
- US-A- 4 420 015
- US-A- 5 253 673

## Beschreibung

Die Erfindung betrifft ein Überdruckventil mit den Merkmalen des Oberbegriffs des Patenanspruchs 1.

Überdruckventile dieser Art sind bekannt durch die DE 1095074 oder die US 5,944,050. Diese Ventile sind aufgrund der Art der Anordnung oder Halterung des Membranschließkörpers nur für verhältnismäßig niedrige Drücke geeignet. Auch beanspruchen sie ein verhältnismäßig großes Bauvolumen mit entsprechend großer Wärmeträgheit, die sich z.B. bei Verwendung in CO₂-Klimaanlagen nachteilig auswirkt.

Durch die US-A- 5,413,311 ist weiterhin ein Membranventil bekannt, dessen durch einen Schließkolben betätigter Gegendruckkörper von einem sowohl bei geschlossener als auch bei geöffneter Ventilposition an dem Membranschließkörper anliegenden Ring umschlossen ist. Über diesen ist der Membranschließkörper im Bereich seines äußeren Umfanges eingespannt. Außerdem bildet er für den Gegendruckkörper einen Anschlag für dessen maximale Hubbewegung. Dieser Anschlag ist so angeordnet, dass der Membranschließkörper bei maximal geöffnetem Ventil eben verläuft. Folglich ist er in Anlage an der Ventilsitzfläche in seinem zentralen Bereich nach unten ausgewölbt.

Durch die DE 1 095 074 B ist ein Überdruckventil mit einem federdruckbelasteten Membranschliesskörper, der in Schliessposition an einer eine erste Ventilöffnung umschliessenden, zentral angeordneten Ventilsitzfläche dichtend anliegt, bekannt.

Dieses Dokument wird als nächstliegender Stand der Technik angesehen und entspricht den Oberbegriff des Anspruchs 1.

Durch die FR-A- 26 77 425 ist außerdem ein Membranschließventil bekannt, das einen möglichst großen Öffnungsquerschnitt aufweisen soll. Hierzu ist der Membranschließkörper in entspanntem Zustand von der Ebene seiner peripheren Einspannung weg tellerförmig von der Ventilsitzfläche weg ausgewölbt. Zum Schließen wird er durch einen Schließkolben entgegen seiner Federkraft in Richtung zu der Ventilsitzfläche über seine Einspannebene hinaus deformiert. Ein den Schließkolben mit Abstand umgebender Ring ist der Tellerform des Membranschließ-körpers angepasst, so dass dieser käfigartig dessen Deformation über seine entspannte, gewölbte Form hinaus verhindert.

Der Erfindung liegt die Aufgabe zugrunde, ein Überdruckventil der eingangs genannten Art zu finden, das bei ausreichend großem Öffnungsquerschnitt ohne Überlastung seines Membranschließkörpers für hohe Druckdifferenzen von mehr als 150 bar zwischen seiner Zu- und Abströmseite geeignet ist. Entsprechend einer bevorzugten Ausführungsform soll es durch besonders kompakte Bauweise trotz relativ großem Durchströmungsquerschnitt eine geringe Wärmeträgheit aufweisen, so dass es vorteilhaft, insbesondere in Bereichen mit starken Temperaturveränderungen anwendbar ist, wie z.B. beim Kühl- und Heizbetrieb einer CO₂-Klimaanlage.

Die Lösung der genannten Aufgabe erfolgt erfindungsgemäß aufgrund der kennzeichnenden Merkmale des Patentanspruchs 1.

Im Folgenden wird die Erfindung anhand von in den Zeichnungen dargestellten Ausführungsbeispielen erläutert. Es zeigt:
Fig.1 einen nicht maßstäblichen Querschnitt durch ein Überdruckventil in Schließposition,
Fig.2 ein zweites Ausführungsbeispiel eines erfindungsgemäßen Überdruckventils im Querschnitt,
Fig.3 einen vergrößerten Ausschnitt der Querschnittsdarstellung nach Fig.1 im Bereich des Membranschließkörpers in dessen Schließposition,
Fig.4 eine Darstellung entsprechend Fig.3 bei vom Ventilsitz abgehobenem, ausgewölbtem Membranschließkörper,
Fig.5 ein drittes Ausführungsbeispiel eines erfindungsgemässen Überdruckventils in vergrösserter Querschnittsdarstellung und
Fig.6 ein viertes Ausführungsbeispiel eines erfindungsgemässen Überdruckventils in vergrössertem Teilquerschnitt.

Das insbesondere für die hohen Drücke einer CO₂-Klimaanlage geeignete Überdruckventil 1 hat vorzugsweise einen einteiligen, kompakten Gehäusekörper 2 mit einem die Anschlusskanäle 3,4 einschliessenden Sockelteil 5 und einer sich an diesen anschliessenden, zylindrischen Gehäusewand 6. Diese bildet einen becherförmigen Gehäuseraum 7, in dessen Boden eine erste und zweite Ventilöffnung 8 und 9 der Anschlusskanäle 3 und 4 münden. Die die erste Ventilöffnung 8 umschliessende Ventilsitzfläche 10 ist nach aussen von einer flach und rinnenförmig in diesen Boden eingeformten Ventilkammer 11 umgeben, die sich nach aussen bis zu einer Klemmsitzfläche 12 erstreckt, die für die Halterung und Abdichtung des Umfangsbereiches eines Membranschliesskörpers 13 vorgesehen ist.

Der Membranschliesskörper 13 ist durch mindestens eine ebene, vorzugsweise metallische Membran gebildet, die in Schliessposition auf der ebenfalls ebenen Ventilsitzfläche 10 aufliegt und dort durch einen die Schliesskraft mindestens eines Federelementes 14 übertragenden Gegendruckkörper 15 in Schliessposition gehalten wird. Aufgrund des somit gegebenen, ebenflächigen Dichtkontakts zwischen der vorzugsweise feingeschliffenen Ventilsitzfläche 10 und der metallischen Membran des Schliesskörpers 13, verbunden mit der in diesem Bereich wirkenden Anpressung durch den Gegendruckkörper 15, ergibt sich eine hohen Drücken und auch Temperaturbelastungen widerstehende Abdichtung.

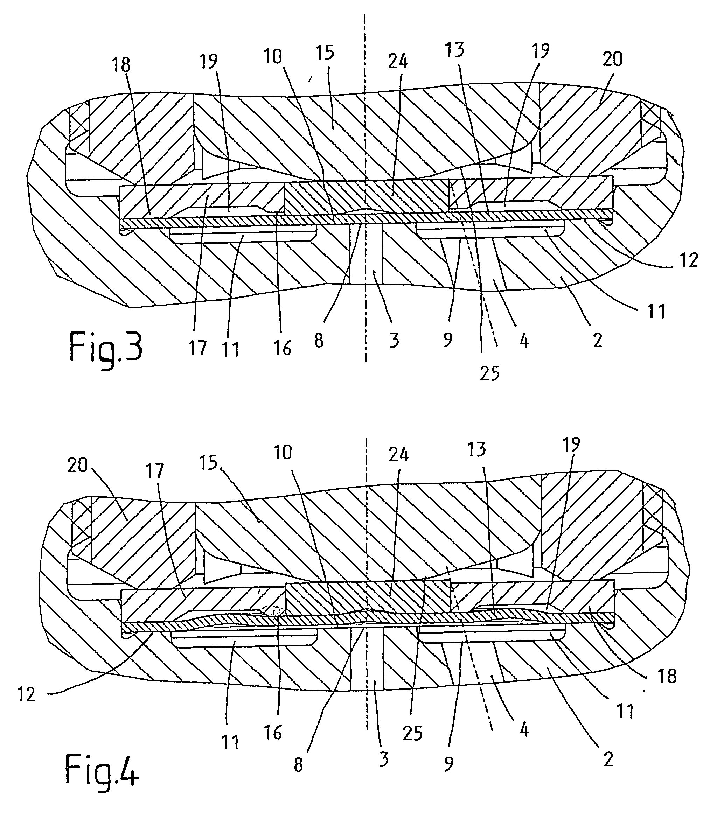

Um beim Öffnen des Ventils unter starkem Überdruck und entsprechendem Zurückweichen des Gegendruckkörpers 15 die Kraft aufnehmen zu können, die plötzlich auf die gesamte freie Membranfläche wirkt und dabei eine zu starke Deformation des Membranschliesskörpers 13 zu verhindern, ist dieser in Abstand vom äusseren Umfang der Ventilsitzfläche 10, oberhalb der rinnenförmig umlaufenden Ventilkammer 11 und gegenüber der zweiten Ventilöffnung 9, auf radial eng begrenztem Bereich, durch den Stützrand 16 eines flachen Stützringes 17 abgestützt. Dieser Stützrand 16 befindet sich bei geschlossenem Ventil in Abstand vom Membranschliesskörper 13, so dass er erst bei dessen Öffnungsbewegung wirksam wird. Er ermöglicht die in Fig.4 veranschaulichte, örtliche Überbeanspruchungen vermeidende, mehrfache Krümmung des Membranschliesskörpers in seiner von der Ventilsitzfläche 10 abgehobenen Position.

Mit einem ausseren, flachen Klemmrand 18 dient der Stützring 17 weiterhin als Klemmring für die Halterung des Randes des Membranschliesskörpers 13. Zwischen seinem Klemmrand 18 und seinem Stützrand 16 hat der Stützring 17 somit eine diese Ränder 16,18 definierende Ausnehmung 19. In diese hinein kann sich die Membran 13 des Schliesskörpers ausgehend von der Position nach Fig.3 verformen, wie die vergrösserte Darstellung des geöffneten Ventils in Fig. 4 zeigt.

Fur die dichtende Anpressung des Stützringes 17 mit seinem Klemmrand 18 gegen den Membranrand ist ein mit Aussengewinde versehener Schraubring 20 vorgesehen, der in Eingriff mit einem an der Gehäusewand 6 vorgesehenem Innengewinde 21 steht.

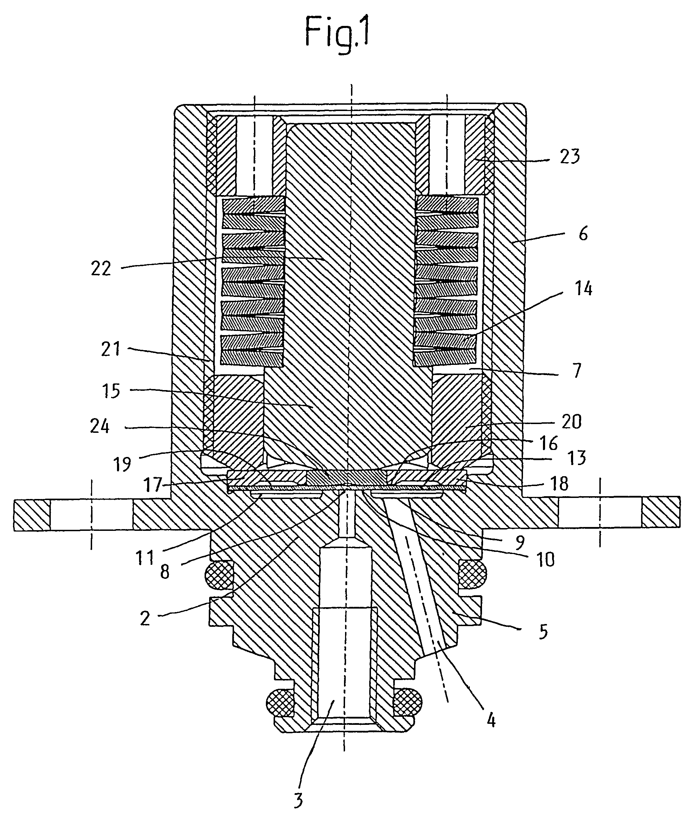

Die Federdruckbelastung des Membranschliesskörpers 13 über den Gegendruckkörper 15 erfolgt sowohl aufgrund ihrer Federcharakteristik als auch aufgrund ihrer geringen Einbauhöhe vorzugsweise durch Tellerfedern 14. Diese umschliessen beim Ausführungsbeispiel nach Fig.1 den Schaft 22 des Gegendruckkörpers 15 und sie sind zwischen einem Absatz des Gegendruckkörpers 15 und einem im Gehäuseraum 7 eingeschraubten Gewindering 23 eingespannt.

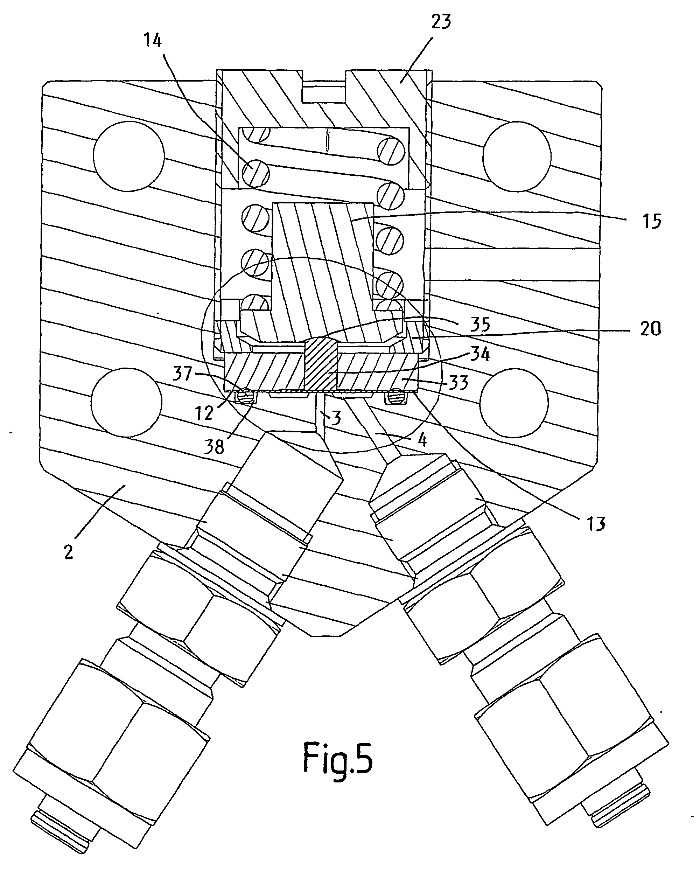

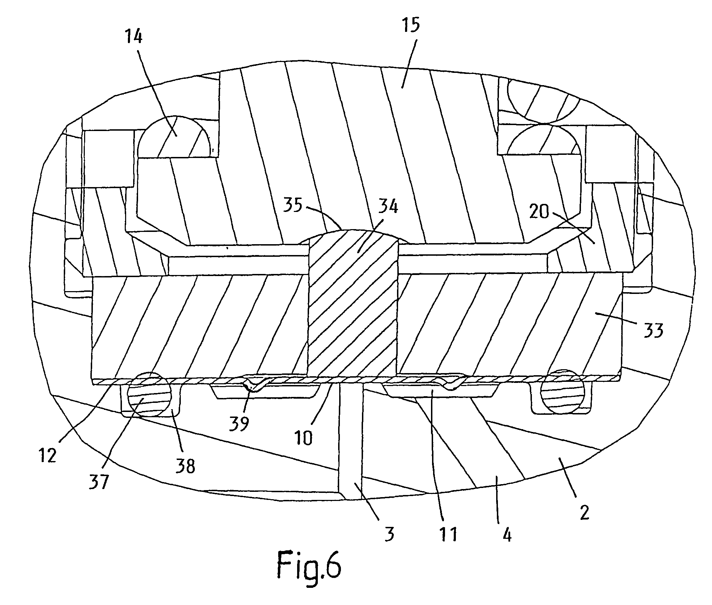

Die Übertragung der Federkraft vom federbelasteten Gegendruckkörper 15 auf den Membranschliesskörper 13 erfolgt vorzugsweise über eine am Membranschliesskörper 13 anliegende Gegendruckplatte 24. Für eine gleichmässige Anpressung des Membranschliesskörpers 13 gegen die Ventilsitzfläche 10 erfolgt der Kontakt zwischen der Gegendruckplatte 24 und dem Gegendruckkörper 15 über eine an mindestens einem von beiden vorgesehene, gekrümmte Fläche, deren Krümmungsmittelpunkt in der Achse der ersten Ventilöffnung 8 liegt. Beim in Fig.1 dargestellten Ausführungsbeispiel befindet sich eine kugelförmig gekrümmte Stirnfläche 25 des Gegendruckkörpers 15 in Druck übertragendem Kontakt mit einer eben ausgeführten, an dem Membranschliesskörper 13 anliegenden Gegendruckplatte 24. Bei den Ausführungsbeispielen nach Fig.5 und 6 hingegen ist ein im Stützring 33 geführter Gegendruckstempel 34 an seinem oberen Ende mit einer konvexen, kreissymmetrischen Krümmung 35 versehen, die in einer entsprechend gekrümmten konkaven Ausnehmung aufgenommen ist.

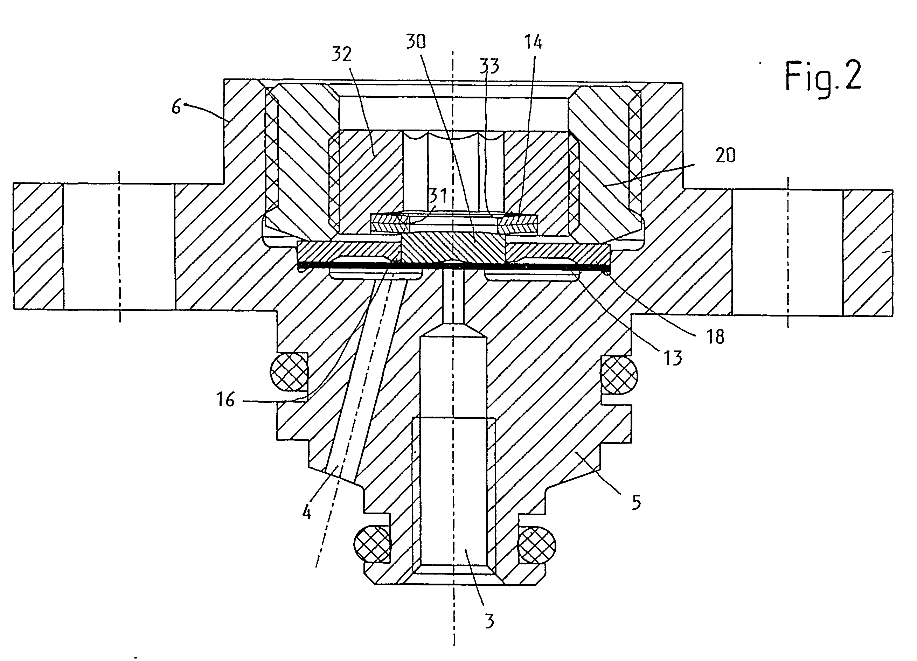

Beim Ausführungsbeispiel nach Fig.2 besteht der Gegendruckkörper 30 nur aus einer Gegendruckplatte 30, und nur zwei gleichsinnig angeordnete Tellerfedern 14 sind in einer Ausnehmung 31 eines die Federvorspannung bestimmenden Schraubkörpers 32 angeordnet. Die im wesentlichen radial verlaufende Innenfläche 33 der Ausnehmung 31 verläuft von den Tellerfedern 14 weg geneigt, so dass diese von der dargestellten, der Schliessposition des Ventils entsprechenden Position aus vom Gegendruckkörper 30 weg ausfedern können. Der Andruck des Gegendruckkörpers erfolgt dabei über die Innenkante der an ihm anliegenden Tellerfeder 14. Der die Tellerfedern 14 spannende Schraubkörper 32 ist zur Begrenzung der Höhe des Ventils in den den Stützring 17 haltenden Schraubring 20 eingeschraubt. Zur flachen Bauweise des Ventils nach Fig.2 trägt auch die minimale, wenig über den Stützring 17 hinaus ragende Höhe des Gegendruckkörpers 30 bei.

Die Fig.5 und 6 zeigen erfindungsgemässe Überdruckventile mit Massnahmen zur Vermeidung von Zugspannungen im Membranschliesskörper 13 aufgrund eines unnachgiebigen Klemmsitzes am Klemmrand 18, die zu einer Veränderung des Ansprechdruckes des Ventils führen. Solche Spannungen ergeben sich, indem der Membranschliesskörper 13 durch seine Ausbiegung beim ersten Öffnen des Ventils etwas aus seinem Klemmsitz am Klemmrand 18 herausgezogen wird und aufgrund von Reibungskräften im Klemmsitz beim nachfolgenden Schliessen nicht vollständig zurückgleiten kann.

Entsprechend einer ersten Massnahme zur Vermeidung von Zugspannungen im Membranschliesskörper ist entsprechend den Darstellungen in Fig.5 und 6 im Bereich des äusseren Membranumfanges bzw. im Bereich der Klemmsitzfläche 18 ein z.B. als O-Ring ausgeführter elastischer Dichtring 37 vorgesehen, der in einer umlaufenden Nut 38 des Gehäusekörpers 2 eingeschlossen ist und unter Vorspannung an dem Membranschliesskörper anliegt. Eine solche Abdichtung des Membranschliesskörpers ermöglicht eine erhebliche Verringerung der Klemmkraft am Klemmrand 18, so dass der Membranschliesskörper 13 beim Öffnen und Schliessen des Ventils im Bereich seiner Randabdichtung eine ausreichende Gleitbewegung ausführen kann, um verbleibende Zugspannungen zu verhindern.

Als zweite z.B. zusätzliche Massnahme zur Vermeidung von Zugspannungen im Membranschliesskörper 13 ist beim Ausführungsbeispiel nach Fig.6 in diesem mindestens eine kreisförmig umlaufende, rillenförmige Ausbuchtung 39 vorgesehen. Die unterhalb des Membranschliesskörpers 13 verlaufende Ventilkammer 11 bietet einen Freiraum für die Anordnung einer solche Ausbuchtung 39. Anstatt einer rillenförmigen Ausbuchtung 39 kann der Membranschliesskörper 13 auch auf nichtdargestellte Weise einen umlaufenden Absatz aufweisen. Ein solcher Absatz im Membranschliesskörper 13 würde jedoch verhindern, dass die periphere Klemmsitzfläche 12 in gleicher Ebene mit der Ventilsitzfläche 10 angeordnet werden kann. Solche umlaufenden Ausbuchtungen 39 oder Absätze können die aufgrund der Öffnungsbewegung des Membranschliesskörpers 13 entstehende, in seiner Ebene des wirkende Zugkraft elastisch aufnehmen, so dass ein Herausziehen des Membranschliesskörpers 13 aus seinem peripheren Klemmsitz an der Klemmsitzfläche 12 verhindert wird.

## Patentansprüche

1. Überdruckventil mit einem federdruckbelasteten Membranschließkörper (13), der in Schließposition an einer eine erste Ventilöffnung (8) umschließenden, zentral angeordneten Ventilsitzfläche (10) dichtend anliegt und dessen den Dichtdruck bestimmende Federdruckbelastung über einen zentral, im Bereich der Ventilsitzfläche (10) über ihm angeordneten Gegendruckkörper (15) erfolgt, wobei die Ventilsitzfläche (10) von einer im Gehäusekörper (2) des Ventils vorgesehenen, rinnenförmigen, vom Membranschließkörper (13) überspannten Ventilkammer (11) umschlossen ist, an der überdruckseitig mindestens eine zweite Ventilöffnung (9) vorgesehen ist, **dadurch gekennzeichnet, dass** der über der Ventilsitzfläche (10) angeordnete Gegendruckkörper (15) oder eine mit diesem zusammenwirkende Gegendruckplatte (24) von einem am Ventilgehäuse (6) gehaltenen Membranstützring (17) umschlossen ist, der sich vom Gegendruckkörper (15) radial nach außen über die Ventilkammer (11) hinweg bis zum Außenrand des Membranschließkörpers (13) erstreckt und oberhalb der Ventilkammer (11) eine umlaufende Ausnehmung (19) aufweist, deren senkrecht zum Membranschließkörper (13) gemessene Tiefe die maximale Auslenkung des Membranschließkörpers bestimmt, so dass der Membranschließkörper (13) bei vollständig geöffnetem Ventil in einem Bereich zwischen der Ventilsitzfläche (10) und seinem Außenrand abgestützt ist, wobei die Ausnehmung (19) radial nach innen durch einen nach unten abstehenden Stützrand (16) begrenzt ist.

2. Überdruckventil nach Anspruch 1, **dadurch gekennzeichnet, dass** der Membranschließkörper (13) in Schließposition entspannt und eben ist und die Ventilsitzfläche (10) sich parallel zum in Schließposition angeordnetem Membranschließkörper (13) erstreckt.

3. Überdruckventil nach Anspruch 1 oder 2, **dadurch gekennzeichnet, dass** zwischen dem Gegendruckkörper (15) und dem Membranschließkörper (13) eine Gegendruckplatte (24) angeordnet ist und der Kontakt zwischen der Gegendruckplatte (24) und dem Gegendruckkörper (15) über eine an mindestens einem von beiden vorgesehene, kreissymmetrische, gekrümmte Fläche (25) erfolgt, deren Krümmungsmittelpunkt in der Achse der ersten Ventilöffnung (8) liegt.

4. Überdruckventil nach einem der Ansprüche 1 bis 3, **dadurch gekennzeichnet, dass** der Stützring (17) an seinem äußeren Umfang einen Klemmrand (18) für die dichtende, klemmende Halterung des Membranschließkörpers (13) an einer umlaufenden Fläche des Gehäusekörpers (2) aufweist, wobei der Stützring (17) durch ein in Richtung auf eine Klemmsitzfläche (12) wirkendes Spannelement (20) unter Vorspannung gehalten ist.

5. Überdruckventil nach einem der Ansprüche 1 bis 4, **dadurch gekennzeichnet, dass** die Ventilkammer (11) radial nach außen durch einen in einer umlaufenden Nut (38) des Gehäusekörpers (2) angeordneten und an dem Membranschließkörper (13) anliegenden Dichtring (37) abgedichtet ist, so dass (13) der Membranschließkörper (13) während seiner Öffnungs- oder Schließbewegung im Bereich seiner Randabdichtung eine in seiner Ebene verlaufende Ausgleichsbewegung ausführt.

6. Überdruckventil nach einem der Ansprüche 1 bis 5, **dadurch gekennzeichnet, dass** der Membranschließkörper (13) im Bereich der Ventilkammer (11) mindestens eine rillenförmig umlaufende Ausbuchtung (39) oder einen Absatz aufweist.

7. Überdruckventil nach einem der Ansprüche 1 bis 6, **dadurch gekennzeichnet, dass** die Federdruckbelastung des Gegendruckkörpers (15) durch mindestens eine Tellerfeder (14) erfolgt.

8. Überdruckventil nach Anspruch 7, **dadurch gekennzeichnet, dass** eine oder zwei gleichsinnig aneinanderliegende Tellerfedern (14) vorgesehen sind, deren Fläche bei geschlossenem Ventil in Richtung zu der ersten Ventilöffnung (8) geneigt ist.

9. Überdruckventil nach Anspruch 7 oder 8, **dadurch gekennzeichnet, dass** der Gegendruckkörper (30) die Form einer im Stützring (17) eingeschlossenen Platte (30) hat.

10. Überdruckventil nach Ansprüche 8 oder 9, **dadurch gekennzeichnet, dass** die Tellerfedern (14) in einer Ausnehmung (31) eines die Federvorspannung bestimmenden Schraubkörpers (32) angeordnet sind.

11. Überdruckventil nach einem der Ansprüche 7 bis 10, **dadurch gekennzeichnet, dass** der die Tellerfedern (14) spannende Schraubkörper (32) in dem den Stützring (17) haltenden Schraubring (20) eingeschraubt ist.

## Claims

1. Pressure relief valve with a spring pressure-loaded diaphragm closing member (13) which, in the closed position, sealingly engages on a centrally positioned valve seat (10) surrounding a first valve opening (8) and whose sealing pressure-determining spring pressure loading takes place by means of a central counterpressure member arranged above and in the vicinity of the valve seat (10), which is surrounded by a valve chamber (11) spanned in ridge-like manner by the diaphragm closing member (13) and provided in the valve housing body (2), whereby on the overpressure side is provided at least one second valve opening (9), **characterized in that** the counterpressure member (15) placed over the valve seat (10) or a counterpressure plate (24) cooperating therewith is surrounded by a diaphragm thrust ring (17) retained on the valve housing (6) and which extends radially outwards from the counterpressure member (15) over and beyond the valve chamber (11) to the outer edge of the diaphragm closing member (13) and above the valve chamber (11) has a circumferential recess (19), whose depth measured perpendicular to the diaphragm closing member (13) determines the maximum deflection of the diaphragm closing member (13), so that when the valve is completely opened said member (13) is supported in an area between the valve seat (10) and its outer edge, the recess (19) being radially inwardly bounded by a downwardly projecting support rim (16).

2. Pressure relief valve according to claim 1, **characterized in that** in the closed position the diaphragm closing member (13) is relieved and planar and the valve seat (10) extends parallel to the diaphragm closing member (13) in the closed position.

3. Pressure relief valve according to claim 1 or 2, **characterized in that** between the counterpressure member (15) and the diaphragm closing member (13) is provided a counterpressure plate (24) and the contact between the latter and the counterpressure member (15) takes place by means of a circular symmetrical, curved surface (25) provided on at least one of these and whose centre of curvature is in the axis of the first valve opening (8).

4. Pressure relief valve according to one of the claims 1 to 3, **characterized in that** on its outer circumference the thrust ring (17) has a clamping rim (18) for the sealing, clamping retention of the diaphragm closing member (13) on a circumferential face of the housing body (2), the thrust ring (17) being held under bias by a tensioning element (20) acting in the direction of the clamping seat (12).

5. Pressure relief valve according to one of the claims 1 to 4, **characterized in that** radially outwardly the valve chamber (11) is sealed by a sealing ring (37) engaging on the diaphragm closing member (13) and located in a circumferential groove (38) of the housing member (2), so that during the opening or closing movement of the diaphragm closing member (13) it performs a compensating movement running in its plane in the vicinity of its marginal seal.

6. Pressure relief valve according to one of the claims 1 to 5, **characterized in that**, in the vicinity of the valve chamber (11), the diaphragm closing member (13) has at least one ridge-shaped, circumferential bulge (39) or a step.

7. Pressure relief valve according to one of the claims 1 to 6, **characterized in that** the spring pressure loading of the counterpressure member (15) takes place through at least one disk spring (14).

8. Pressure relief valve according to claim 7, **characterized in that** one or two unidirectionally engaging disk springs (14) are provided, whose surface is inclined in the direction of the first valve opening (8) when the valve is closed.

9. Pressure relief valve according to claim 7 or 8, **characterized in that** the counterpressure member (30) is in the form of a plate (30) enclosed in the thrust ring (17).

10. Pressure relief valve according to claim 8 or 9, **characterized in that** the disk springs (14) are located in a recess (31) of a spring bias-determining screw body (32).

11. Pressure relief valve according to one of the claims 7 to 10, **characterized in that** the screw body (32) tensioning the disk springs (14) is screwed into a screw ferrule (20) retaining the thrust ring (17).

## Revendications

1. Soupape de surpression, avec un élément de fermeture à diaphragme (13) sollicité par la pression d'un ressort, qui, en position de fermeture, est en appui de manière étanche sur un siège de soupape (10) disposé de manière centrale et entourant une première ouverture de soupape (8) et dont la mise sous tension par la pression de ressorts, définissant la pression d'étanchéité, est assurée par un élément de contre-pression (15) disposé de manière centrale dans la zone du siège de la soupape (10) et au-dessus de celui-ci, la zone du siège de la soupape (10) étant entourée d'une chambre de soupape (11) en forme de canal prévue dans le corps de boîtier (2) de la soupape, recouverte de l'élément de fermeture à diaphragme (13), et dans laquelle est prévue, du côté de la surpression, au moins une seconde ouverture de soupape (9), **caractérisée en ce que** l'élément de contre-pression (15) disposé au-dessus du siège de la soupape (10), ou une plaque de contre-pression (24) coopérant avec celui-ci, est entouré d'un anneau d'appui (17) du diaphragme, fixé sur le corps (6) de la soupape, qui s'étend radialement vers l'extérieur, à partir de l'élément de contre-pression (15), pardessus la chambre de soupape (11), jusqu'au bord extérieur de l'élément de fermeture à diaphragme (13) et présente, au-dessus de la chambre de soupape (11), un évidement (19) périphérique, dont la profondeur, mesurée perpendiculairement à l'élément de fermeture à diaphragme (13), détermine le débattement maximal de l'élément de fermeture à diaphragme (13), de sorte que l'élément de fermeture à diaphragme (13), lorsque la soupape est entièrement ouverte, est en appui dans une zone entre le siège de la soupape (10) et son bord extérieur, l'évidement (19) étant délimité dans la direction radiale vers l'intérieur par un rebord d'appui (16) dépassant vers le bas.

2. Soupape de surpression selon la revendication 1, **caractérisée en ce que** l'élément de fermeture à diaphragme (13) est détendu et plan en position de fermeture et **en ce que** le siège de la soupape (10) s'étend parallèlement à l'élément de fermeture à diaphragme (13) disposé en position de fermeture.

3. Soupape de surpression selon la revendication 1 ou 2, **caractérisée en ce qu'**une plaque de contre-pression (24) est disposée entre l'élément de contre-pression (15) et l'élément de fermeture à diaphragme (13) et **en ce que** le contact entre la plaque de contre-pression (24) et l'élément de contre-pression (15) s'effectue par le biais d'une surface (25) courbe, symétrique circulaire, prévue sur au moins l'un des deux éléments, dont le centre de courbure se situe dans l'axe de la première ouverture de soupape (8).

4. Soupape de surpression selon l'une des revendications 1 à 3, **caractérisée en ce que** l'anneau d'appui (17) présente, sur sa périphérie extérieure, un rebord de blocage (18) pour une fixation étanche par serrage de l'élément de fermeture à diaphragme(13) sur une surface périphérique du corps du boîtier (2), l'anneau d'appui (17) étant maintenu sous précontrainte par un élément de serrage (20) agissant sur une surface d'appui de serrage (12).

5. Soupape de surpression selon l'une des revendications 1 à 4, **caractérisée en ce que** la chambre de soupape (11) est rendue étanche dans la direction radiale vers l'extérieur par le biais d'un anneau d'étanchéité (37) en appui sur l'élément de fermeture à diaphragme (13) logé dans une gorge périphérique (38) du corps de boîtier (2), de sorte que l'élément de fermeture à diaphragme (13), lors de son mouvement d'ouverture ou de fermeture effectue, dans la zone de son étanchéité périphérique, un déplacement de compensation dans son plan.

6. Soupape de surpression selon l'une des revendications 1 à 5, **caractérisée en ce que** l'élément de fermeture à diaphragme (13) présente au moins un renfoncement (39) en forme de rainure périphérique ou un épaulement dans la zone de la chambre de soupape (11).

7. Soupape de surpression selon l'une des revendications 1 à 6, **caractérisée en ce que** la contrainte par pression de ressort de l'élément de contre-pression (15) est réalisée par le biais d'au moins une rondelle élastique (14).

8. Soupape de surpression selon la revendication 7, **caractérisée en ce qu'**une ou deux rondelles élastiques (14) juxtaposées dans le même sens, et dont la surface, lorsque la soupape est fermée, est inclinée en direction de la première ouverture de soupape (8), sont prévues.

9. Soupape de surpression selon la revendication 7 ou 8, **caractérisée en ce que** l'élément de contre-pression (30) a la forme d'une plaque (30) enfermée dans l'anneau d'appui (17).

10. Soupape de surpression selon la revendication 8 ou 9, **caractérisée en ce que** les rondelles élastiques (14) sont logées dans un évidement (31) d'un élément à visser (32) déterminant la précontrainte des ressorts.

11. Soupape de surpression selon l'une des revendications 7 à 10, **caractérisée en ce que** l'élément à visser (32) qui met les rondelles élastiques (14) sous tension est vissé dans l'anneau à visser (20) maintenant l'anneau d'appui (17).
